# EUROPEAN PATENT APPLICATION

(11) **EP 1 069 094 A2**
(43) Date of publication of application: **17.01.2001**
(21) Application number: 00113767.8
(22) Date of filing: 29.06.2000
(51) Int. Cl.: C05F 17/02, C05F 9/02

(54) **Composting system for processing biomasses**

(30) Priority: 13.07.1999 IT MI991551
(71) Applicant: Ionics Italba S.P.A., 20126 Milano (IT)
(72) Inventor: Grechi, Renzo, 20146 Milano (IT); Vaccaro, Guido, 20133 Milano (IT)
(74) Representative: Cicogna, Franco

(57) **Abstract**

The present invention relates to a composting system for processing biomasses, comprising at least a processing cell, including a plurality of adjoining and independent ways, the biomass being processed being caused to successively pass from a starting way to an unloading way, further intermediate rest ways being moreover provided.

Each of the mentioned ways is coupled to an air delivery assembly, operating by suction and blowing.

## Description

### BACKGROUND OF THE INVENTION

The present invention relates to a composting system for processing biomasses.

Conventional composting systems, as is known, comprise several system sections (for example receiving, pre-processing, bio-oxidizing, ageing, storing sections).

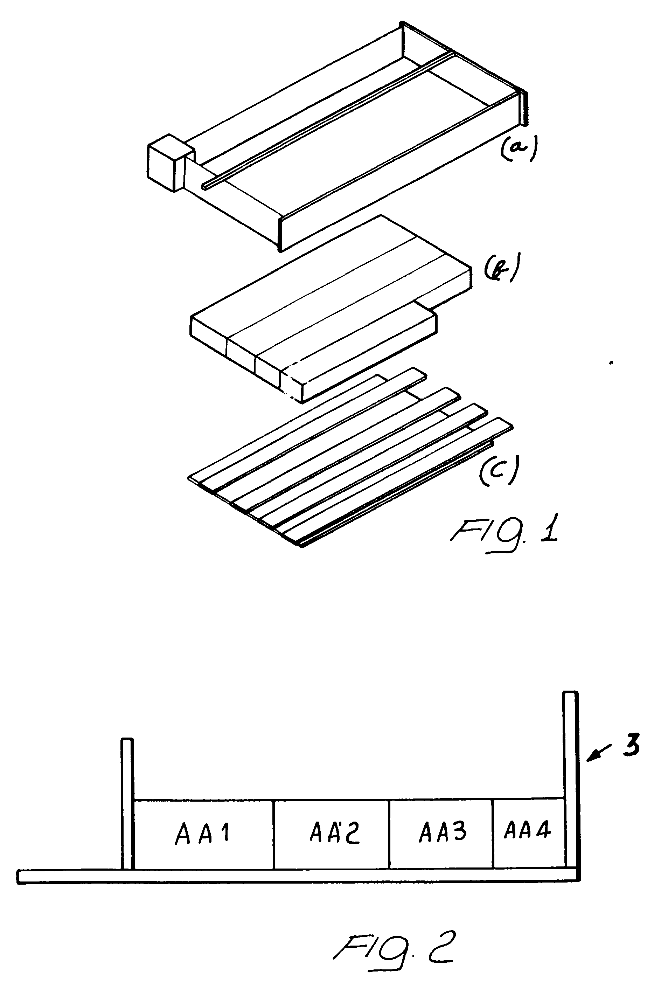

More specifically, the bio-oxidation section, which is the core of the system, requires suitable systems and methods for supplying oxygen to the masses being transformed, for taking the exhausted air and for air exchanging and biomass turning purposes (Figure 1).

A main problem of prior composting system is related to the odorous substances coming from the fermenting biomasses.

In order to prevent said ill-odorous substances from evolving, conventional odour suppressing systems are provided, to which the exhausted air from several sectors of the system are conveyed. The overall suction apparatus, in particular, is so designed as to provide at a maximum three or four air exchangings for hour.

Moreover, as is further known, the bio-oxidation process occurring in the composting systems provides a volume reduction of the masses being transformed of substantially 30-40%.

This volumetric loss will cause a reduction of the accumulated mass size, which cannot be recovered at subsequent processing steps.

Accordingly, space is disadvantageously wasted.

Moreover, the supply of oxygen to the biomass is usually provided by mechanically reversing the biomass, and, as it should be apparent, this operation would provide a poor oxygen supply.

Improved approaches, in which air suction/blowing mechanisms are used to enhance the bio-oxidation conditions, are scarcely practical, since the air net delivery occurs generally through a single fan.

Thus, the air distribution is not an optimum one.

Moreover, in prior art composting systems, the temperature and moisture parameters in the accumulated biomass are not continuously monitored, but they are manually determined by sampling, with the consequent requirement of a great amount of labour, with an associated great cost increase.

### SUMMARY OF THE INVENTION

Accordingly, the aim of the present invention is to overcome the above mentioned problems, by providing a composting system for processing biomasses, allowing to optimize the environmental conditions in the bio-oxidation section thereof, thereby providing a greater air rate (a great number of air exchangers/hour) through the system operating sectors or sections (the biomass reversing and translation sections) generating a comparatively high amount of ill-odorous substances, as well as air moisture and powder (with a consequent reduction of the visibility).

Within the scope of the above mentioned aim, a main object of the represent invention is to provide a composting system for processing biomasses which, owing to its specifically designed features, is adapted to optimize the available space, in particular for obviating any volume reduction occurring during the biomass processing steps.

Yet another object of the present invention is to provide such a composting system in which the biomass product oxidation can be optimized by suitably distributing air through the biomass being processed.

Another object of the present invention is to provide such a composting system in which the temperature, moisture and air rate measurements can be performed by a continuously monitoring automatic instrument assembly.

Yet another object of the present invention is to provide such a composting system for processing biomasses which can be easily made from easily available elements and materials.

According to one aspect of the present invention, the above mentioned aim and objects, as well as yet other objects, which will become more apparent hereinafter, are achieved by a composting system for processing biomasses, characterized in that said composting system comprises at least a processing cell, including a plurality of adjoining ways for successively transferring the biomass being processed from a starting way to an unloading way.

Each of said ways is coupled to an air delivery or distributing assembly.

### BRIEF DESCRIPTION OF THE DRAWINGS

Further characteristics and advantages of the present invention will become more apparent hereinafter from the following disclosure of a preferred, though not exclusive, embodiment of a composting system for processing biomasses, being illustrated, by way of an indicative, but not limitative, example in the accompanying drawings, where:
In Figure 1 the letter (a) indicates the circuit for taking the exhausted air, the letter (b) indicates the reversals and volumetric recovery and the letter (c) indicates the system for sucking/blowing air from/into the heaps.
Figure 2 schematically shows the width variations of the biomass heaps, with a consequent gradual volume reduction of the biomasses being processed;
Figure 3 is a further schematic view illustrating an assembly of cells made of several adjoining ways;
Figure 4 illustrates the arrangement of the air delivery or distribution pipes along a way;
Figure 5 illustrates one of the floor channels in which are engaged the air delivery or distribution pipes;
Figure 6 illustrates the air distribution or delivery assembly, during a suction from heap step;
Figure 7 illustrates the air distribution or delivery assembly, during an operating step in which air is blown into a biomass heap; and
Figure 8 is a top side perspective view illustrating a schematic diagram of the composting system according to the present invention.

### DESCRIPTION OF THE PREFERRED EMBODIMENTS

### Controlling of exhausted air (Fig. 1a)

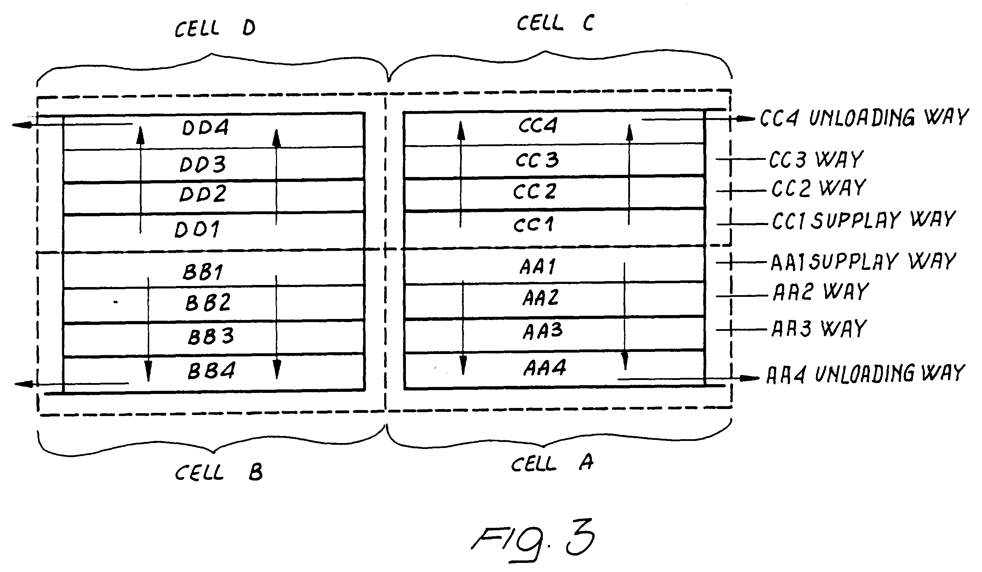

With reference to the number and letter references of the accompanying drawing figures, the composting system for processing biomasses comprises a plurality of working or processing cells (A, B, C, D in Fig. 3), four in the shown embodiment, each whereof includes a plurality of ways (AA, BB, CC, DD, in Fig. 3). The working or processing cells are advantageously made by reinforced concrete dividing walls, at which, in order to provide a substantial insulation of said cells, are provided corresponding cloth or sheet elements, having a free bottom and a top latched to the ceiling.

The processing cells are operatively connected to corresponding autonomous manifolds for sucking the exhausted air.

The main manifold, in particular, is branched into individual suction lines, the flow rate therethrough can be modified by shutter valves.

The compartmenting of the bio-oxidation section into independent volumes allows to provide suitable environment conditions in the operating sector in which the processing is performed.

This is practically achieved by controlling the different air inter-exchangings by hour through the different cells comprising the system, by holding only one air inter-exchange/hour in the rest-condition cells, i.e. in the non-operative cells, for a time required for performing the reversing and transferring operations occurring in an active cell.

Thus, it is possible to provide in an active cell up to 10 air inter-exchangings/hour.

### Controlling of the biomasses (Fig. 1b)

The material to be subjected to the composting process is distributed, by rubberized blades, or any other suitable automatic system, along the material supply way (AA1, BB1, CC1, DD1 in Fig. 3).

The composted material, on the other hand, is removed from the discharging or unloading way, by rubberized blades or any other suitable automatic removal system, through the unloading way (AA4, BB4, CC4, DD4 in Fig. 3).

The reversing-transferring apparatus is brought to the inlet of the way (AA3, BB3, CC3, DD3 in Fig. 3), after having removed from the unloading way (AA4, BB4, CC4, DD4 in Fig. 3) the composted material, thereby starting the reversing-transferring step.

The biomasses, in particular, are collected and raised by the mentioned reversing-transferring apparatus and conveyed to the adjoining way; the operation is continued in a like manner for the following ways, up to the loading way.

During the bio-oxidation process, the biomass being transformed volume is reduced of about 35%.

The operating control of this processing step, or intensive operating step, allows to recover the mentioned volume reduction by using a reversing or turning device including an adjustable length conveyor belt.

Thus, the size of the biomass heaps at the processing ways following the first can be modified according to requirements, thereby providing a heap arrangement which, the height being the same, will include a plurality of heaps with their base or bottom progressively narrowing from the supply way to the unloading way.

### Controlling of the air delivery to the biomass heaps (Fig. 1c):

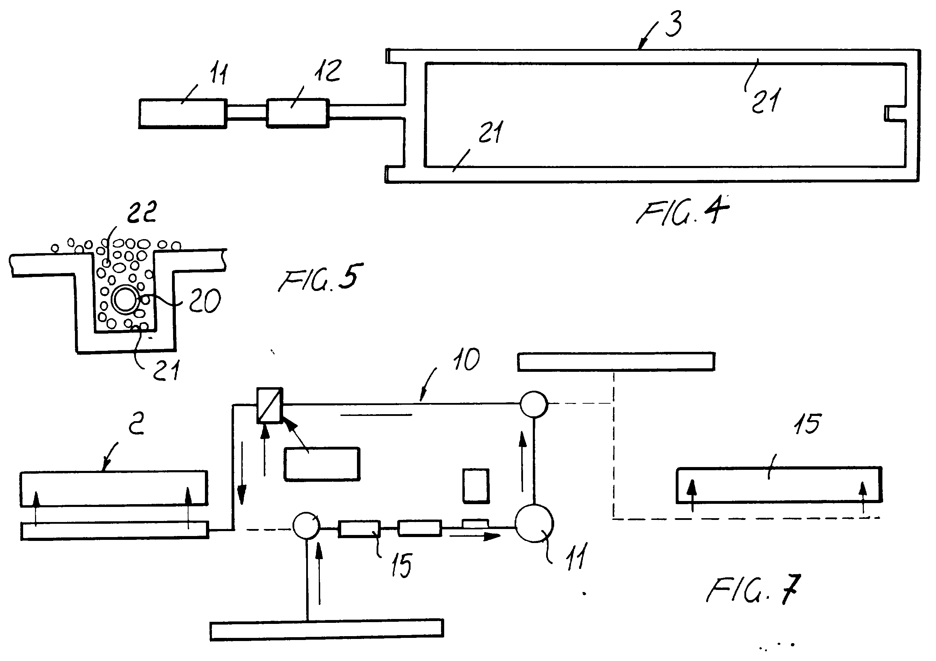

The oxygenation of the biomass being transformed is optimized by a forced heap aeration system, the air being delivered through floor channels including therein PVC pipes coupled to the fans (11 in Fig. 4).

The periodic turning overs or reversals, which are necessary for transferring the materials from the supply way to the unloading way, are specifically carried out for homogenizing the biomasses, reversing the layers thereof, interrupting possible preferential courses of air and disposing the excess heat.

Along the cross extension of the processing cell, from the supply way to the unloading way, the biologic process occurs on different age materials, characterized by a different transforming degree.

In this connection, it would be advantageous to provide a greater oxygen rate to the supply ways occupied by a fresh product and limit the oxygen rate to the unloading ways, by suitably changing the supply rates of the fans.

This operation, on the other hand, would be not necessary owing to the volumetric recovery made as above disclosed.

In fact, by holding the heap height along the different ways unchanged, the amount of volatile solid materials which are present in each ton of material occupying a m2, is held unmodified.

Each way is operatively coupled to a respective fan (11 in Fig. 4), having a flow rate proportional to the volatile substance amount of the biomass being processed, allowing to convey air in a different manner depending on the process requirements and on the contingent needs.

The mentioned air delivery or distribution system comprise a plurality of pipes (20 in Fig. 5), with asymmetrical perforations aligned upward, and housed in corresponding floor channels (21 in Fig. 5), in a number of two for each way closed as a loop, as is schematically shown in Figure 4, and being protected at the top by a layer (22 in Fig. 5) of wood chips, having a poor disagregating capability, with a minimum ratio surface/volume and a high resistance against microorganisms.

Owing to their small width, preventing the wheels of the used mechanical means to lower therein, and preventing thereby possible pipe damages, the mentioned channels are devoid of any protection grates, thereby facilitating the chips replacing operations and the removal of possible jams.

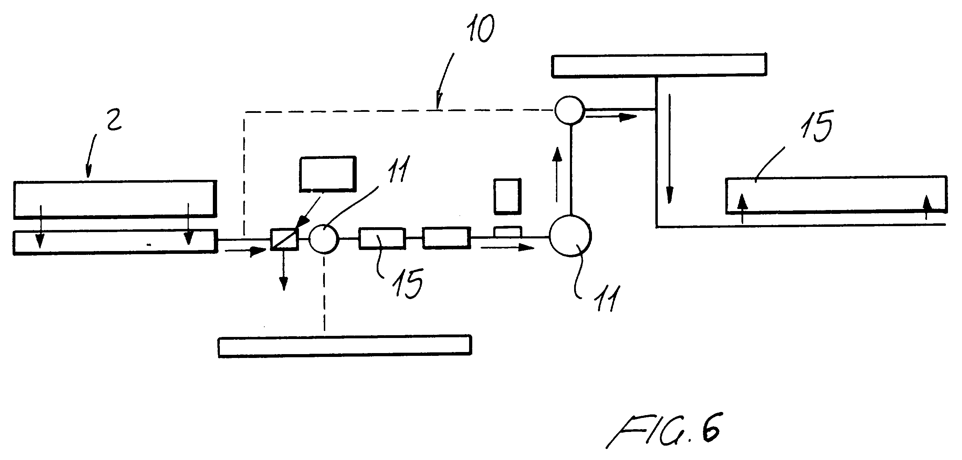

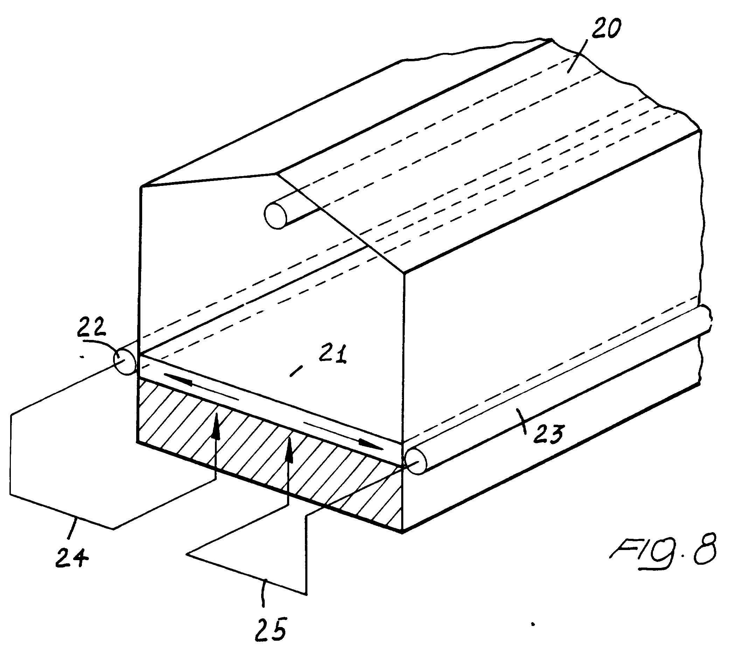

The fans are characterized by an inherent possibility of reversing the suction and blowing flows, as it is schematically shown in Figures 6 and 7.

Thus, it is possible to supply the material heaps with air flows reach of oxygen or facilitate the gaseous inter-exchange, in a passive manner, through the heap surfaces.

During the suction step, the liquid particles held in the air coming from the heaps are picked up by suitable apparatus, before their inlet to the fan.

The aerating pipe holding channels are arranged with a suitable slanted arrangement in order to facilitate the outflow of the percolated material.

The latter, after having being collected in a sealed tank, is then used for supplying the nebulizers used through the different ways and being thereby used for moistening the biomasses.

### Further compartmenting of the processing cell

The processing or working cell, made by subdividing the mentioned bio-oxidation section, can be in turn further compartmented by providing a cloth element arranged horizontally, at a spacing of about 1 meter, above the fermenting heap.

In this case, said heap will occupy the overall processing or working cell (Fig. 8).

In order to allow the heap to be easily turned over or reversed, said cloth article can be automatically wound about an axis arranged along a side of the cell.

The exhausted air from the heap are taken or picked by two manifolds, arranged within the space between the heap and cloth, and being conveyed to the floor blowing net.

This method will allow to use, for aerating the materials being transformed, air having a high concentration of compounds adapted to facilitate a degrading of the volatile substances which are generated during the organic substance oxidation reactions.

This, in turn, would allow to convey to the system air having a less load of ill-odorous molecules.

With reference to the composting system shown in Figure 8, it is herein shown a suction manifold 20 for exhausted air, arranged at a set height.

Moreover, a cloth 21 is horizontally arranged, in cooperation with the suction manifolds 22 and 23 comprising a floor air blowing net.

From the above disclosure it should be apparent that the invention fully achieves the intended aim and objects.

In particular, in the disclosed system, all the operating steps have been fully automatized and are controlled by a central control and drive unit.

The invention, as disclosed, is susceptible to several modifications and variations, all of which will come within the scope of the invention.

Moreover, all the construction details can be replaced by other technically equivalent elements.

In practicing the invention, the used materials, provided that they are compatible to the intended application, as well as the contingent size and shapes can be any depending on requirements.

## Claims

1. A composting system for processing biomasses, characterized in that said composting system comprises at least a processing cell, including a plurality of adjoining ways, transversely of which the biomasses being processed are transferred from a supply way to an unloading way, each said ways being coupled to an air distribution assembly.

2. A composting system, according to Claim 1, characterized in that each said processing cell is made of reinforced concrete dividing walls and compartmenting cloth elements.

3. A composting system, according to Claims 1 and 2, characterized in that said compartmenting of the bio-oxidation section into independent volumes allows to hold suitable environment condition in the sector in which the operating steps are performed, this being obtained by differently controlling the number of air intra-exchanges by hour through the different cells comprising the system, by holding a single air inter-exchange/hour in the rest cells, i.e. the non operating cells, for a time necessary for carrying out the turning over and transferring operation being performed in an active cell, thereby providing in an active cell up to 10 air inter-exchanges by hour.

4. A composting system, according to one or more of the preceding claims, characterized in that the material being transformed heaps have a constant height and a width decreasing from the supply way to the unloading way in order to overcome the biomass volume reduction.

5. A composting system, according to one or more of the preceding claims, characterized in that said composting system comprises means for transferring and turning over the biomasses, said means including an adjustable length conveyor belt.

6. A composting system, according to one or more of the preceding claims, characterized in that said air distribution assembly comprises a respective fan for each said way.

7. A composting system, according to one or more of the preceding claims, characterized in that in said system are provided a plurality of floor channels including air distribution PVC pipes, extending along a longitudinal axis of the way, and being protected by a wood chip layer, and being devoid of covering grids.

8. A composting system for processing biomasses, according to one or more of the preceding claims, and substantially as broadly disclosed and illustrated and for the intended objects.
